# EUROPEAN PATENT APPLICATION

(11) **EP 4 827 194 A1**
(43) Date of publication of application: **21.10.2026**
(21) Application number: 24902360.7
(22) Date of filing: 22.10.2024
(51) Int. Cl.: H04W 68/02

(54) **PAGING METHOD AND APPARATUS, AND STORAGE MEDIUM**

(30) Priority: 15.12.2023 CN 202311736959
(71) Applicant: Datang Mobile Communications Equipment Co., Ltd., Beijing 100085 (CN)
(72) Inventor: ZHANG, Xiangdong, Beijing 100085 (CN); ZHANG, Dajun, Beijing 100085 (CN)
(74) Representative: Studio Torta S.p.A.
(86) International application number: PCT/CN2024/126563
(87) International publication number: WO 2025/123936

(57) **Abstract**

The present disclosure provides a paging method and apparatus, and a storage medium, relating to the field of communication technology. The paging method includes: acquiring a paging related configuration, where the paging related configuration includes a first time, and the first time is used to determine a time slot for the terminal to monitor a paging message; and monitoring the paging message based on the paging related configuration. The method avoids frequent cell reselection, downlink synchronization and system message reading by the terminal, thereby reducing power consumption of the terminal.

## Description

This application claims priority to Chinese Patent Application No. 202311736959.7, filed with the China National Intellectual Property Administration on December 15, 2023 and entitled "PAGING METHOD AND APPARATUS, AND STORAGE MEDIUM", the content of which is hereby incorporated by reference in its entirety.

### TECHNICAL FIELD

The present disclosure relates to the field of communication technology and, in particular, to a paging method and apparatus, and a storage medium.

### BACKGROUND

A current mobile communication network can be divided into a terrestrial network (Terrestrial Network, TN) and a non-terrestrial network (Non-TN, NTN). In the NTN network, a cellular cell moves rapidly with a high-speed movement of a satellite. As a result, for paging, reception and transmission of a paging message depend on a cell configuration. A terminal camped on an NTN cell needs to frequently perform cell reselection, downlink synchronization and system message reading, leading to increased power consumption of the terminal.

### SUMMARY

The present disclosure provides a paging method and apparatus, and a storage medium to avoid frequent cell reselection, downlink synchronization and system message reading by a terminal, thereby reducing power consumption of the terminal.

In a first aspect, the present disclosure provides a paging method, applied to a terminal, including:
acquiring a paging related configuration, where the paging related configuration includes a first time, and the first time is used to determine a time slot for the terminal to monitor a paging message;
monitoring the paging message based on the paging related configuration.

In an implementation, the acquiring the paging related configuration includes:
acquiring the paging related configuration during a registration procedure or a tracking area update procedure of the terminal.

In an implementation, the paging related configuration includes a paging cycle;
the monitoring the paging message based on the paging related configuration includes:
determining, based on the first time and the paging cycle, the time slot for the terminal to monitor the paging message;
monitoring the paging message based on a determined time slot for the terminal to monitor the paging message.

In an implementation, the first time is a time corresponding to a first paging time slot.

In an implementation, the paging related configuration includes a paging cycle and an interval between paging time slots;
the monitoring the paging message based on the paging related configuration includes:
determining, based on the first time, the paging cycle and the interval between paging time slots, the time slot for the terminal to monitor the paging message;
monitoring the paging message according to a determined time slot for the terminal to monitor the paging message.

In an implementation, the paging related configuration includes one or more of the following: a timing advance for monitoring the paging message, a timing delay for monitoring the paging message or a time window length for monitoring the paging message.

In an implementation, the paging related configuration includes a pilot signal, and the monitoring the paging message based on the paging related configuration includes:
monitoring the pilot signal based on the paging related configuration, and monitoring a physical downlink control channel when the pilot signal is monitored, where the physical downlink control channel is used to schedule the paging message.

In an implementation, the paging related configuration includes a time for stopping monitoring the paging message based on the paging related configuration, and/or the paging message includes first indication information, where the first indication information is used to indicate that the terminal stops monitoring the paging message based on the paging related configuration after accessing a next cell.

In an implementation, the paging related configuration includes a ground area of a tracking area list or a tracking area where the terminal is located.

In an implementation, the method further includes:
transmitting second indication information, where the second indication information is used to indicate that the terminal supports and/or expects to monitor the paging message based on the paging related configuration.

In an implementation, the paging related configuration includes a first part determined by a core network device, and/or a second part determined by an access network device.

In an implementation, the paging related configuration is bound to a ground area or a tracking area where the terminal is located.

In an implementation, the first time is an absolute time.

In a second aspect, the present disclosure provides a paging method, applied to a core network device, including:
acquiring a paging related configuration, where the paging related configuration includes a first time, and the first time is used to determine a time slot for a terminal to monitor a paging message;
transmitting the paging related configuration to the terminal.

In an implementation, the method further includes:
transmitting a first paging message to an access network device, where the first paging message includes the paging related configuration.

In an implementation, the transmitting the paging related configuration to the terminal includes:
transmitting the paging related configuration to the terminal during a registration procedure and/or a tracking area update procedure of the terminal.

In an implementation, the paging related configuration includes one or more of the following: a timing advance for monitoring the paging message, a timing delay for monitoring the paging message or a time window length for monitoring the paging message.

In an implementation, the paging related configuration includes a pilot signal.

In an implementation, the paging related configuration includes a time for stopping monitoring the paging message based on the paging related configuration, and/or the first paging message includes first indication information, where the first indication information is used to indicate that the terminal stops monitoring the paging message based on the paging related configuration after accessing a next cell.

In an implementation, the paging related configuration includes a ground area of a tracking area list or a tracking area where the terminal is located.

In an implementation, the method further includes:
receiving second indication information transmitted by the terminal, where the second indication information is used to indicate that the terminal supports and/or expects to monitor the paging message based on the paging related configuration.

In an implementation, a part of the paging related configuration is determined by the core network device and the other part of the paging related configuration is determined by the access network device, and the first paging message includes a paging related configuration determined by the core network device.

In an implementation, the paging related configuration is bound to a ground area or a tracking area where the terminal is located.

In an implementation, the first time is an absolute time.

In a third aspect, the present disclosure provides a paging method, applied to an access network device, including:
receiving a first paging message transmitted by a core network device, where the first paging message includes a paging related configuration, the paging related configuration includes a first time, and the first time is used to determine a time slot for a terminal to monitor a paging message;
transmitting the paging message to the terminal based on the paging related configuration.

In an implementation, the first paging message includes a paging related configuration determined by the core network device, and the method further includes:
transmitting a paging related configuration determined by the access network device to the core network device.

In an implementation, the paging related configuration includes one or more of the following: a timing advance for monitoring the paging message, a timing delay for monitoring the paging message or a time window length for monitoring the paging message.

In an implementation, the paging related configuration includes a pilot signal.

In an implementation, the paging related configuration includes a time for stopping monitoring the paging message based on the paging related configuration, and/or the first paging message includes first indication information, where the first indication information is used to indicate that the terminal stops monitoring the paging message based on the paging related configuration after accessing a next cell.

In an implementation, the paging related configuration includes a ground area of a tracking area list or a tracking area where the terminal is located.

In an implementation, the paging related configuration is bound to a ground area or a tracking area where the terminal is located.

In an implementation, the first time is an absolute time.

In a fourth aspect, the present disclosure provides a paging apparatus, including:
an acquiring module, configured to acquire a paging related configuration, where the paging related configuration includes a first time, and the first time is used to determine a time slot for a terminal to monitor a paging message;
a monitoring module, configured to monitor the paging message based on the paging related configuration.

In an implementation, the acquiring module includes:
an acquiring unit, configured to acquire the paging related configuration during a registration procedure or a tracking area update procedure of the terminal.

In an implementation, the paging related configuration includes a paging cycle; and the monitoring module includes:
a first determining unit, configured to determine, based on the first time and the paging cycle, the time slot for the terminal to monitor the paging message;
a first monitoring unit, configured to monitor the paging message based on a determined time slot for the terminal to monitor the paging message.

In an implementation, the first time is a time corresponding to a first paging time slot.

In an implementation, the paging related configuration includes a paging cycle and an interval between paging time slots; and the monitoring module includes:
a second determining unit, configured to determine based on the first time, the paging cycle and the interval between paging time slots, the time slot for the terminal to monitor the paging message;
a second monitoring unit, configured to monitor the paging message according to a determined time slot for the terminal to monitor the paging message.

In an implementation, the paging related configuration includes one or more of the following: a timing advance for monitoring the paging message, a timing delay for monitoring the paging message or a time window length for monitoring the paging message.

In an implementation, the paging related configuration includes a pilot signal, and the monitoring module includes:
a third monitoring unit, configured to monitor the pilot signal based on the paging related configuration, and monitor a physical downlink control channel when the pilot signal is monitored, where the physical downlink control channel is used to schedule the paging message.

In an implementation, the paging related configuration includes a time for stopping monitoring the paging message based on the paging related configuration, and/or the paging message includes first indication information, where the first indication information is used to indicate that the terminal stops monitoring the paging message based on the paging related configuration after accessing a next cell.

In an implementation, the paging related configuration includes a ground area of a tracking area list or a tracking area where the terminal is located.

In an implementation, the apparatus further includes:
a transmitting unit, configured to transmit second indication information, where the second indication information is used to indicate that the terminal supports and/or expects to monitor the paging message based on the paging related configuration.

In an implementation, the paging related configuration includes a first part determined by a core network device, and/or a second part determined by an access network device.

In an implementation, the paging related configuration is bound to a ground area or a tracking area where the terminal is located.

In an implementation, the first time is an absolute time.

In a fifth aspect, the present disclosure provides a paging apparatus, including:
an acquiring module, configured to acquire a paging related configuration, where the paging related configuration includes a first time, and the first time is used to determine a time slot for a terminal to monitor a paging message;
a transmitting module, configured to transmit the paging related configuration to the terminal.

In an implementation, further includes:
a first transmitting unit, configured to transmit a first paging message to an access network device, where the first paging message includes the paging related configuration.

In an implementation, the transmitting module includes:
a second transmitting unit, configured to transmit the paging related configuration to the terminal during a registration procedure and/or a tracking area update procedure of the terminal.

In an implementation, the paging related configuration includes one or more of the following: a timing advance for monitoring the paging message, a timing delay for monitoring the paging message or a time window length for monitoring the paging message.

In an implementation, the paging related configuration includes a pilot signal.

In an implementation, the paging related configuration includes a time for stopping monitoring the paging message based on the paging related configuration, and/or the first paging message includes first indication information, where the first indication information is used to indicate that the terminal stops monitoring the paging message based on the paging related configuration after accessing a next cell.

In an implementation, the paging related configuration includes a ground area of a tracking area list or a tracking area where the terminal is located.

In an implementation, the apparatus further includes:
a receiving module, configured to receive second indication information transmitted by the terminal, where the second indication information is used to indicate that the terminal supports and/or expects to monitor the paging message based on the paging related configuration.

In an implementation, a part of the paging related configuration is determined by the core network device and the other part of the paging related configuration is determined by the access network device, and the first paging message includes a paging related configuration determined by the core network device.

In an implementation, the paging related configuration is bound to a ground area or a tracking area where the terminal is located.

In an implementation, the first time is an absolute time.

In a sixth aspect, the present disclosure provides a paging apparatus, including:
a receiving module, configured to receive a first paging message transmitted by a core network device, where the first paging message includes a paging related configuration, the paging related configuration includes a first time, and the first time is used to determine a time slot for a terminal to monitor a paging message;
a transmitting module, configured to transmit the paging message to the terminal based on the paging related configuration.

In an implementation, the first paging message includes a paging related configuration determined by the core network device, and the apparatus further includes:
a transmitting unit, configured to transmit a paging related configuration determined by the access network device to the core network device.

In an implementation, the paging related configuration includes one or more of the following: a timing advance for monitoring the paging message, a timing delay for monitoring the paging message or a time window length for monitoring the paging message.

In an implementation, the paging related configuration includes a pilot signal.

In an implementation, the paging related configuration includes a time for stopping monitoring the paging message based on the paging related configuration, and/or the first paging message includes first indication information, where the first indication information is used to indicate that the terminal stops monitoring the paging message based on the paging related configuration after accessing a next cell.

In an implementation, the paging related configuration includes a ground area of a tracking area list or a tracking area where the terminal is located.

In an implementation, the paging related configuration is bound to a ground area or a tracking area where the terminal is located.

In an implementation, the first time is an absolute time.

In a seventh aspect, the present disclosure provides a paging apparatus, including: a memory, a transceiver and a processor:
where the memory is configured to store a computer program; the transceiver is configured to transmit and receive data under control of the processor; and the processor is configured to read the computer program from the memory and perform the following operations:
acquiring a paging related configuration, where the paging related configuration includes a first time, and the first time is used to determine a time slot for a terminal to monitor a paging message;
monitoring the paging message based on the paging related configuration.

In an implementation, the processor is configured to perform:
acquiring the paging related configuration during a registration procedure or a tracking area update procedure of the terminal.

In an implementation, the paging related configuration includes a paging cycle; and the processor is configured to perform:
determining, based on the first time and the paging cycle, the time slot for the terminal to monitor the paging message;
monitoring the paging message based on a determined time slot for the terminal to monitor the paging message.

In an implementation, the first time is a time corresponding to a first paging time slot.

In an implementation, the paging related configuration includes a paging cycle and an interval between paging time slots; and the processor is configured to perform:
determining, based on the first time, the paging cycle and the interval between paging time slots, the time slot for the terminal to monitor the paging message;
monitoring the paging message according to a determined time slot for the terminal to monitor the paging message.

In an implementation, the paging related configuration includes one or more of the following: a timing advance for monitoring the paging message, a timing delay for monitoring the paging message or a time window length for monitoring the paging message.

In an implementation, the paging related configuration includes a pilot signal, and the processor is configured to perform:
monitoring the pilot signal based on the paging related configuration, and monitoring a physical downlink control channel when the pilot signal is monitored, where the physical downlink control channel is used to schedule the paging message.

In an implementation, the paging related configuration includes a time for stopping monitoring the paging message based on the paging related configuration, and/or the paging message includes first indication information, where the first indication information is used to indicate that the terminal stops monitoring the paging message based on the paging related configuration after accessing a next cell.

In an implementation, the paging related configuration includes a ground area of a tracking area list or a tracking area where the terminal is located.

In an implementation, the processor is configured to perform:
transmitting second indication information, where the second indication information is used to indicate that the terminal supports and/or expects to monitor the paging message based on the paging related configuration.

In an implementation, the paging related configuration includes a first part determined by a core network device, and/or a second part determined by an access network device.

In an implementation, the paging related configuration is bound to a ground area or a tracking area where the terminal is located.

In an implementation, the first time is an absolute time.

In an eighth aspect, the present disclosure provides a paging apparatus, including: a memory, a transceiver and a processor:
where the memory is configured to store a computer program; the transceiver is configured to transmit and receive data under control of the processor; and the processor is configured to read the computer program from the memory and perform the following operations:
acquiring a paging related configuration, where the paging related configuration includes a first time, and the first time is used to determine a time slot for a terminal to monitor a paging message;
transmitting the paging related configuration to the terminal.

In an implementation, the processor is configured to perform:
transmitting a first paging message to an access network device, where the first paging message includes the paging related configuration.

In an implementation, the processor is configured to perform:
transmitting the paging related configuration to the terminal during a registration procedure and/or a tracking area update procedure of the terminal.

In an implementation, the paging related configuration includes one or more of the following: a timing advance for monitoring the paging message, a timing delay for monitoring the paging message or a time window length for monitoring the paging message.

In an implementation, the paging related configuration includes a pilot signal.

In an implementation, the paging related configuration includes a time for stopping monitoring the paging message based on the paging related configuration, and/or the first paging message includes first indication information, where the first indication information is used to indicate that the terminal stops monitoring the paging message based on the paging related configuration after accessing a next cell.

In an implementation, the paging related configuration includes a ground area of a tracking area list or a tracking area where the terminal is located.

In an implementation, the processor is configured to perform:
receiving second indication information transmitted by the terminal, where the second indication information is used to indicate that the terminal supports and/or expects to monitor the paging message based on the paging related configuration.

In an implementation, a part of the paging related configuration is determined by a core network device and the other part of the paging related configuration is determined by the access network device, and the first paging message includes a paging related configuration determined by the core network device.

In an implementation, the paging related configuration is bound to a ground area or a tracking area where the terminal is located.

In an implementation, the first time is an absolute time.

In a ninth aspect, the present disclosure provides a paging apparatus, including: a memory, a transceiver and a processor:
where the memory is configured to store a computer program; the transceiver is configured to transmit and receive data under control of the processor; and the processor is configured to read the computer program from the memory and perform the following operations:
receiving a first paging message transmitted by a core network device, where the first paging message includes a paging related configuration, the paging related configuration includes a first time, and the first time is used to determine a time slot for a terminal to monitor a paging message;
transmitting the paging message to the terminal based on the paging related configuration.

In an implementation, the first paging message includes a paging related configuration determined by the core network device, and the processor is configured to perform:
transmitting a paging related configuration determined by an access network device to the core network device.

In an implementation, the paging related configuration includes one or more of the following: a timing advance for monitoring the paging message, a timing delay for monitoring the paging message or a time window length for monitoring the paging message.

In an implementation, the paging related configuration includes a pilot signal.

In an implementation, the paging related configuration includes a time for stopping monitoring the paging message based on the paging related configuration, and/or the first paging message includes first indication information, where the first indication information is used to indicate that the terminal stops monitoring the paging message based on the paging related configuration after accessing a next cell.

In an implementation, the paging related configuration includes a ground area of a tracking area list or a tracking area where the terminal is located.

In an implementation, the paging related configuration is bound to a ground area or a tracking area where the terminal is located.

In an implementation, the first time is an absolute time.

In a tenth aspect, the present disclosure provides a non-transitory readable storage medium, where the non-transitory readable storage medium stores a computer program, and the computer program is used for causing a processor to perform the method according to the first aspect, the second aspect or the third aspect

It should be understood that the content described in the above summary section is not intended to identify key or important features of the embodiments of the present disclosure, nor is it intended to limit the scope of the present disclosure. Other features of the present disclosure will become readily understood from the following description.

### BRIEF DESCRIPTION OF DRAWINGS

To more clearly illustrate the technical solutions of the present application or in the prior art, a brief introduction to the accompanying drawings required for describing the embodiments or the prior art will be provided below. It is evident that the accompanying drawings described below are some embodiments of the present application, and for a person of ordinary skill in the art, other accompanying drawings can be obtained based on these accompanying drawings without creative effort.
FIG. 1 is a schematic diagram I of a satellite network system.
FIG. 2 a schematic diagram of another satellite network system.
FIG. 3 is a schematic diagram of a cell type in an NTN.
FIG. 4 is a schematic diagram of a cell type in another NTN.
FIG. 5 is a schematic flowchart I of a paging method provided by an embodiment of the present disclosure.
FIG. 6 is a schematic diagram of a coverage area of a satellite cell provided by an embodiment of the present disclosure.
FIG. 7 is a schematic diagram of a configuration process of a paging-related configuration provided by an embodiment of the present disclosure.
FIG. 8 is a schematic diagram of terminals at different positions covered by a satellite cell provided by an embodiment of the present disclosure.
FIG. 9 is a schematic flowchart of a terminal accessing a network provided by an embodiment of the present disclosure.
FIG. 10 is a schematic flowchart II of a paging method provided by an embodiment of the present disclosure.
FIG. 11 is a schematic flowchart III of a paging method provided by an embodiment of the present disclosure.
FIG. 12 is a schematic flowchart IV of a paging method provided by an embodiment of the present disclosure.
FIG. 13 is a schematic structural diagram I of a paging apparatus provided by an embodiment of the present disclosure.
FIG. 14 is a schematic structural diagram II of a paging apparatus provided by an embodiment of the present disclosure.
FIG. 15 is a schematic structural diagram III of a paging apparatus provided by an embodiment of the present disclosure.
FIG. 16 is a schematic structural diagram IV of a paging apparatus provided by an embodiment of the present disclosure.
FIG. 17 is a schematic structural diagram V of a paging apparatus provided by an embodiment of the present disclosure.
FIG. 18 is a schematic structural diagram VI of a paging apparatus provided by an embodiment of the present disclosure.

### DESCRIPTION OF EMBODIMENTS

A term "and/or" in the embodiments of the present disclosure is an association relationship describing associated objects, and represents that there may be three relationships. For example, A and/or B may represent three situations: presence of A only, presence of both A and B, and presence of B only. A character "/" herein generally represents an "or" relationship between contextual objects.

A term "plurality" in the embodiments of the present disclosure refers to two or more than two, and other quantifiers are similar.

The technical solutions in the embodiments of the present disclosure will be described as follows clearly and completely in conjunction with accompanying drawings in the embodiments of the present disclosure. Apparently, the described embodiments are merely a part of the embodiments of the present disclosure, rather than all of them. Based on the embodiments of the present disclosure, all other embodiments obtained by those of ordinary skill in the art without paying creative effort shall fall within the protection scope of the present disclosure.

The embodiments of the present disclosure provide a paging method and apparatus, which avoid frequent cell reselection, downlink synchronization and system message reading by a terminal, thereby reducing power consumption of the terminal.

The method and the apparatus are based on the same application concept. Since the method and the apparatus solve the problem with similar principles, reference can be made to each other for the implementation of the apparatus and the method, and repeated descriptions are omitted.

The technical solutions provided by the embodiments of the present disclosure can be applied to various systems. For example, an applicable system can be: a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system and its evolved communication systems, etc. These various systems all include terminal devices and network devices. The system may also include a core network component, such as an evolved packet system (evolved packet system, EPS), a 5G system (5GS), etc.

The terminal device involved in the embodiments of the present disclosure may be a device that provides voice and/or data connectivity to a user, a handheld device with a wireless connection function, or other processing devices connected to a wireless modem, etc. Names of the terminal device may also vary in different systems. For example, in a 5G system, the terminal device may be called user equipment (User Equipment, UE). A wireless terminal device may be a USB storage device, other personal computer memory devices and dongles, and may also communicate with one or more core networks (Core Network, CN) via a radio access network (Radio Access Network, RAN). The wireless terminal may be a mobile terminal device, such as a mobile phone (or called a "cellular" phone) and a computer with a mobile terminal, for example, a portable, pocket-sized, handheld, computer built-in, or vehicle-mounted mobile device, that exchanges language and/or data with the radio access network. For example, a personal communication service (Personal Communications Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), a personal computer, a tablet computer, a machine-type communication (Machine-type Communication, MTC) terminal device and other devices. The wireless terminal device can also be called a system, a subscriber unit (subscriber unit), a subscriber station (subscriber station), a mobile station (mobile station), a mobile (mobile), a remote station (remote station), an access point (access point), a remote terminal device (remote terminal), an access terminal device (access terminal), a user terminal device (user terminal), a user agent (user agent), and a user device (user device), and a wireless accessor and a router/modem that meet the limitations of this definition, which are not limited in the embodiments of the present disclosure.

The network device involved in the embodiments of the present disclosure may be an access network device, such as a base station, and the base station may include a plurality of cells providing services to the terminal. According to different specific application scenarios, the base station can also be called as an access point, or a device in the access network that communicates with the wireless terminal device through one or more sectors on an air interface, or other names. The network device may be used to interchange a received air frame with an Internet protocol (Internet Protocol, IP) packet, and may act as a router between the wireless terminal device and the rest of the access network, the rest of the access network may include an Internet protocol (IP) communication network. The network device may also coordinate the management of attributes of the air interface. For example, the network device involved in the embodiments of the present disclosure may be an evolutional network device (evolutional Node B, eNB or e-NodeB) in a long term evolution (long term evolution, LTE) system, or a 5G base station (gNB) in a 5G network architecture (next generation system), etc., and may also be a home evolved base station (Home evolved Node B, HeNB), a relay node (relay node), a home base station (femto), a pico base station (pico), a network test device, etc., which are not limited in the embodiments of the present disclosure. In some network structures, the network device may include a centralized unit (centralized unit, CU) node and a distributed unit (distributed unit, DU) node, and the centralized unit and the distributed unit may also be geographically separated. The network device involved in the embodiments of the present disclosure may be a core network (Core Network) device.

In the embodiments of the present disclosure, the description that the terminal device transmits relevant information to the network side device, or similar descriptions only indicates that the terminal device transmits the relevant information in a wireless signal manner, and an intended recipient is the network device. The network device can obtain the relevant information by receiving the wireless signal.

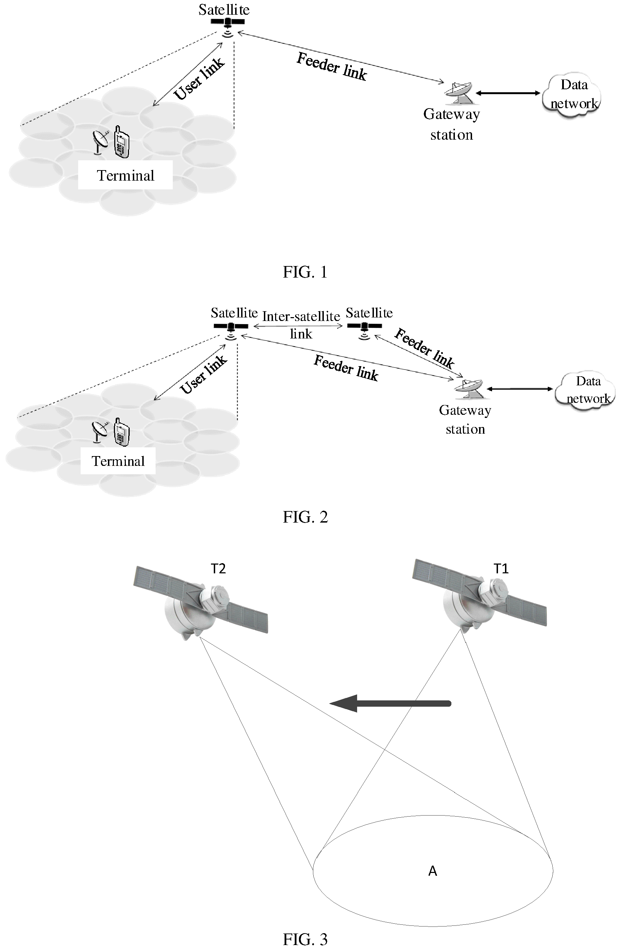

There are two working modes in a satellite communication system. One is a transparent forwarding mode, as shown in FIG. 1. In this mode, a satellite only forwards a signal transparently without any processing, and a terminal communicates with a gateway station, that is, the satellite only performs frequency conversion, wireless signal amplification and other operations on uplink/downlink signals, and a function of the satellite is similar to that of a radio frequency relay. The other is a regenerative communication mode, as shown in FIG. 2. In this mode, the satellite can detect information of a received signal and process and forward it, complete a function of a base station, and connect the terminal and the gateway station, that is, the satellite can perform frequency conversion, wireless signal amplification, encoding/modulation, demodulation/decoding and other operations on the uplink/downlink signals. That is to say, the satellite can have all or part of functions of a gNB and can regenerate the signal.

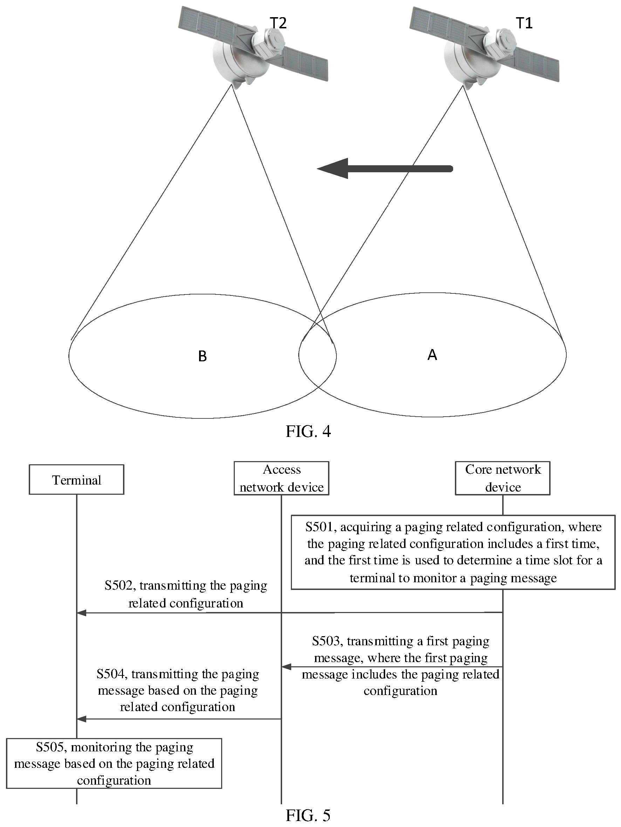

There are different cell types in an NTN. An earth-fixed cell (Earth-Fixed cell) refers to that a ground coverage area of a serving cell of the satellite does not change with a movement of the satellite within a certain period of time. That is, a "staring" mode is adopted, where the satellite is moving, but within the certain period of time, the satellite appears to be "staring" at the ground area. As shown in FIG. 3, the satellite moves from a time instant T1 to a time instant T2, and the ground coverage area of the satellite is always an area A. In this scenario, with the movement of the satellite, an angle between a satellite antenna and the ground changes with the movement of the satellite, so as to ensure that an area covered by the satellite antenna remains unchanged. A quasi-earth fixed cell (quasi-Earth Fixed cell) is similar to the earth-fixed cell, except that a period of time during which the satellite "stars" at the ground is relatively short, that is, a time interval between T1 and T2 is short. An earth-moving cell (Earth-moving cell) refers to that the ground coverage area of the serving cell of the satellite changes with the movement of the satellite. As shown in FIG. 4, the coverage area of the satellite is the area A at the time instant T1 and an area B at the time instant T2. In this scenario, with the movement of the satellite, the angle between the satellite antenna and the ground is almost unchanged.

Whether it is the above quasi-Earth-Fixed cell or Earth-moving cell, a cell mapped by the satellite on the ground will move rapidly with the movement of the satellite. The difference is that the former does not move within a certain period of time, but the cell also moves rapidly in the long run, and the latter moves continuously and rapidly. For the terminal, when the cell changes, the terminal needs to perform cell reselection, complete synchronization with a new cell, and read a system message of the new cell, so as to timely monitor a paging of a network. However, frequent cell reselection brings a great burden to the terminal and increases the power consumption of the terminal.

In view of the above problems, an embodiment of the present disclosure proposes a paging method that utilizes a time related configuration to transmit and receive paging messages, reducing the dependence of paging message transmission and reception on cell configuration, so that the terminal does not need to care about changes in the cell and does not need to perform cell reselection.

FIG. 5 is a schematic flowchart I of a paging method provided by an embodiment of the present disclosure. As shown in FIG. 5, the method includes the following.

S501, a core network device acquires a paging related configuration, where the paging related configuration includes a first time, and the first time is used to determine a time slot for a terminal to monitor a paging message.

Optionally, the paging related configuration may be determined by the core network device and/or an access network device, that is, the paging related configuration includes: a first part determined by the core network device, and/or a second part determined by the access network device. Optionally, the part of the configuration determined by the access network device, such as a base station, is referred to as an access network configuration (RAN-Configuration) or a base station configuration (BS-Configuration). For the convenience of description, the following description takes a base station or a base station configuration (BS-Configuration) as an example. For example, the BS-Configuration may include: a cell specific (cell specific) configuration in a paging message, a default paging cycle, the number of paging time slots in one paging cycle, a configuration related to a paging early indication (Paging Early Indication, PEI) or a wake-up signal (Wake-up Signaling, WUS), a configuration of a physical downlink control channel (Physical Downlink Control Channel, PDCCH) related to paging, etc. The part of the configuration determined by the core network is referred to as an other-configuration (Other-Configuration). For example, the Other-Configuration may include: a UE specific paging cycle, a UE specific WUS or PEI configuration, etc. The core network device may acquire the above BS-Configuration from a base station side. It should be noted that the embodiments of the present disclosure do not limit specific information included in the configurations respectively determined by the core network device and the access network device, and the above is only an example.

Optionally, when a manner by which the core network device acquires the BS-Configuration from the base station is applied to a transparent transmission scenario of an earth-fixed cell, for a ground fixed area, a ground base station may have a determined BS-Configuration, and the BS-Configuration is determined by the ground base station, without changing with the change of a specific satellite or a satellite cell covering the area.

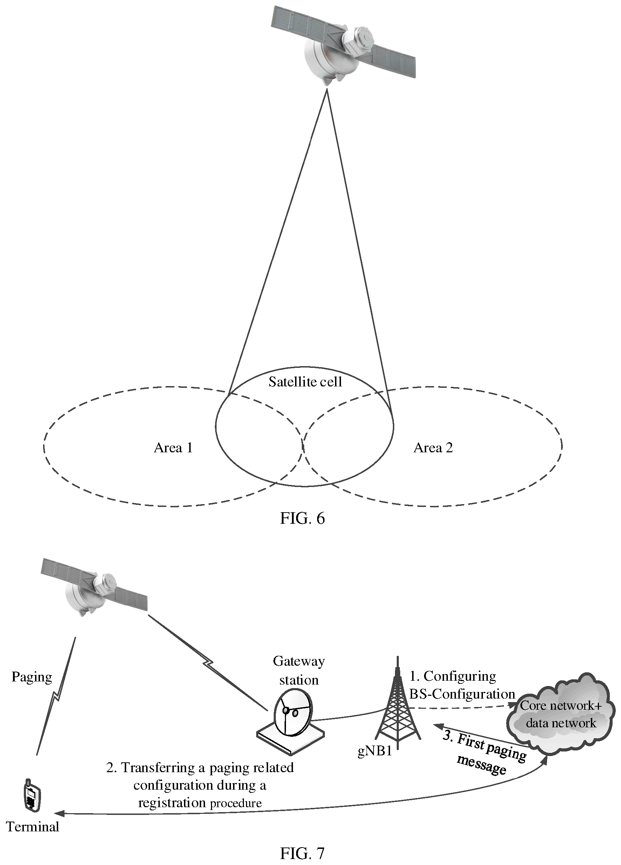

Optionally, the paging related configuration may be regional, that is, a paging related configuration of a specific ground area are the same, and the configuration is determined regardless of how the satellite cell covering that ground area changes. Of course, the paging related configuration of the specific ground area can be updated. Or, for the specific ground area, its paging related configuration is related to the specific ground area and does not change with the change of the satellite or satellite cell covering the specific ground area. Of course, the paging related configuration corresponding to the specific ground area may be the same within a certain period of time, it may change or be updated after the certain period of time. Whether in a transparent transmission mode or a regenerative mode, the satellite cell covering this ground area transmits a paging message by using this configuration. As shown in FIG. 6, if a satellite cell (cell) covers two ground areas (an area 1 and an area 2) across their boundaries, the satellite cell can choose to transmit a paging message by using respective paging related configurations of the two ground areas. That is: for a paging of a terminal in the area 1, a paging message is transmitted by using a paging related configuration corresponding to the area 1; and for a paging of a terminal in the area 2, a paging message is transmitted by using a paging related configuration corresponding to the area 2.

Optionally, the paging related configuration is bound to a ground area or a tracking area (Tracking Area, TA) where the terminal is located, and one TA corresponds to one ground area, and corresponds to one paging related configuration. Then, when the satellite cell covers the corresponding ground area, it uses the paging related configuration corresponding to the ground area.

Optionally, the core network device and/or the access network device can update the paging related configuration. For example, an update cycle may be predefined, the paging related configuration is updated based on the update cycle, and the paging related configuration does not change within the update cycle. If the core network device and/or the access network device need to update the paging related configuration, it is necessary to ensure that all relevant terminals can obtain updated paging related configuration.

Optionally, the paging message related configuration may be fixed, such as that specified in a standard.

Optionally, the first time in the paging related configuration is an absolute time, so that the terminal can determine the time slot for the terminal to monitor the paging message based on the absolute time. The absolute time may be, for example, a UTC (Universal Time Coordinated, Coordinated Universal Time) time. That the first time in the paging-related configuration is an absolute time may be understood as that the first time indicates a UTC time, for example, indicates a value of a UTC second with a unit of 10 milliseconds, and the value is calculated from a Gregorian calendar (Gregorian calendar) date of January 1, 1900 (midnight between December 31, 1899 (Sunday) and January 1, 1900 (Monday)). Of course, it may also be an absolute time in other forms, which is not limited in the present disclosure. It is only necessary that a device transmitting a paging message (such as an access network device) and a device receiving the paging message (such as a terminal) have a clear, accurate and common understanding of a transmitting time slot of the paging message without receiving a cell system message.

S502, the core network device transmits the paging related configuration to the terminal.

Optionally, the core network device transmits the paging related configuration to the terminal during a registration procedure or a TA update (Tracking Area Update) procedure of the terminal. That is, the terminal can acquire the paging related configuration during the registration procedure or the TA update procedure.

S503, the core network device transmits a first paging message to an access network device, where the first paging message includes the paging related configuration.

Optionally, in a case where a part of the paging related configuration is determined by the access network device (such as a base station) and the other part of the paging related configuration is determined by the core network device, the first paging message includes a paging related configuration determined by the core network device. For example, the first paging message includes the above Other-Configuration.

For example, referring to FIG. 7, in a case where the base station transmits the BS-Configuration to the core network device, the core network device transmits the paging related configuration to the terminal during the terminal registration procedure, which includes the BS-Configuration and the Other-Configuration, and the core network device transmits the first paging message to the base station, which includes the Other-Configuration, and the station transmits the paging message to the terminal through the gateway station and the satellite. In a case where the base station does not transmit the BS-Configuration to the core network device, the core network device transmits the paging related configuration to the terminal during the terminal registration procedure, where the paging related configuration is all determined by the core network device, the core network device transmits the first paging message to the base station, which includes the paging related configuration, and the base station transmits the paging message to the terminal through the gateway station and the satellite.

S504, the access network device transmits the paging message to the terminal based on the paging related configuration.

In a case where the paging related configuration is all determined by the core network device, the access network device transmits the paging message to the terminal based on the paging related configuration in the first paging message. In the case where the part of the paging related configuration is determined by the access network device and the other part of the paging related configuration is determined by the core network device, the access network device transmits the paging message to the terminal based on the paging related configuration carried in the first paging message and the paging related configuration determined by the access network device itself, that is, the access network device determines the time slot for transmitting the paging message based on the paging related configuration, and transmits the paging message to the terminal according to the determined time slot for transmitting the paging message. The method for the access network device to determine the time slot for transmitting the paging message is the same as the method for the terminal to determine the time slot for monitoring the paging message.

S505, the terminal monitors the paging message based on the paging related configuration.

The terminal determines the time slot for the terminal to monitor the paging message based on the first time in the paging related configuration, and then monitors the paging message based on the time slot, such as monitoring a control channel (such as a PDCCH), so as to obtain the paging message. The first time in the paging related configuration of different terminals may be the same or different.

It should be noted that in S504, the access network device transmits the paging message to the terminal according to the time slot for transmitting the paging message determined by the access network device itself, and in S505, the terminal monitors the paging message according to the time slot for monitoring the paging message determined by the terminal itself. The access network device and the terminal perform corresponding operations based on their respective determined time slots. The numbering of S504 and S505 in the above method flow are not used to limit the chronological order of S504 and S505.

Optionally, the paging related configuration includes a paging cycle (duration); and the terminal determines the time slot for the terminal to monitor the paging message based on the first time and the paging cycle, and monitors the paging message according to the determined time slot for the terminal to monitor the paging message.

For example, a determined paging time slot may be the first time + k*duration, where k takes an integer starting from 0, or the first time + (k-1)*duration, where k takes an integer starting from 1. In a case where the first time is an absolute time, an absolute time of the time slot for the UE to monitor the paging message is obtained by calculation according to the above method. For example, an absolute time of a first time slot in which the terminal monitors the paging message is the first time, an absolute time of a second time slot for the terminal to monitor the paging message is the first time + duration, an absolute time of a third time slot for the terminal to monitor the paging message is the first time + 2*duration, and so on.

Optionally, the first time is a time corresponding to a first paging time slot, and the first paging time slot is a time slot for the terminal to monitor the paging message. The time corresponding to the time slot for the terminal to monitor the paging message is recorded as a PO (Paging Occasion). Then, a time of a next time slot for monitoring the paging message is: PO = PO + duration. A time of each time slot for monitoring the paging message can be obtained by continuously iterating according to the above formula.

Optionally, the paging related configuration includes the paging cycle and an interval between paging time slots. The terminal determines the time slot for the terminal to monitor the paging message based on the first time, the paging cycle and the interval between paging time slots, and monitors the paging message according to the determined time slot for the terminal to monitor the paging message.

For example, the first time is a time corresponding to an original starting point of a paging time slot, such as an epoch time. Taking duration as a unit, epoch time + N*duration, where N takes an integer starting from 0, or epoch time + (N-1)*duration, where N takes an integer starting from 1, is a starting point of one paging cycle. If there are m paging time slots in one paging cycle and an interval between each paging time slot is gap, a time of each paging time slot is epoch time + N*duration + M*gap, where M takes an integer from 0 to m-1, or epoch time + (N-1)*duration + (M-1)*gap, where M takes an integer from 1 to m. The above parameters can all be obtained when the terminal registers, and the terminal does not need to read them from a broadcast cell of a cell. Optionally, the terminal can use an identifier of the terminal to determine, from multiple paging time slots in the paging cycle, one paging time slot as the time slot for the terminal to monitor the paging message. For example, a serial number of the time slot for the terminal to monitor the paging message is determined by the following formula: Seq = floor (UE_id/m), or Seq = UE_id mod m, where UE_id is the identifier of the terminal, and m is the number of paging time slots in one paging cycle.

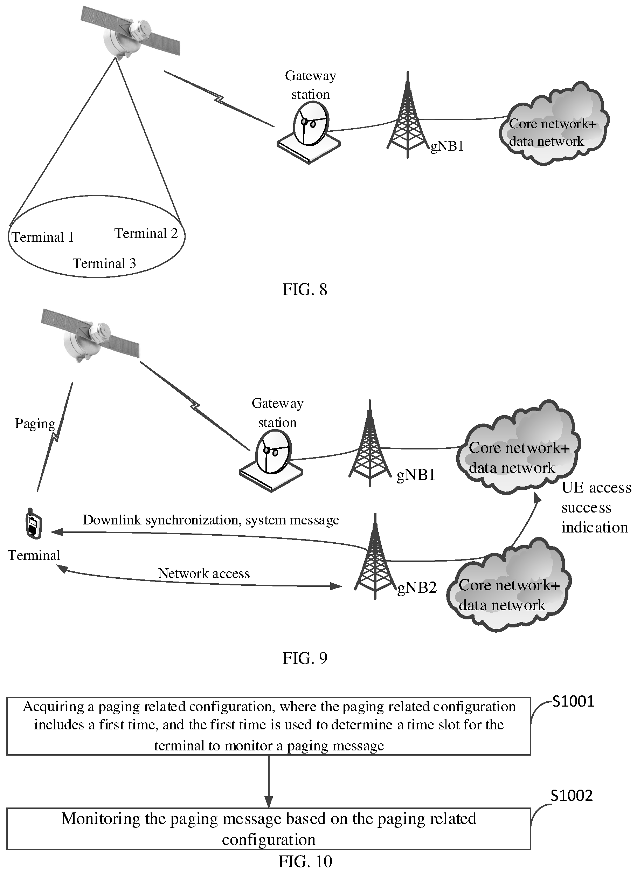

Optionally, referring to FIG. 8, there are terminals at different positions in a ground area covered by the same satellite cell, and the time for the paging message to reach the terminals at different positions after being simultaneously transmitted from the satellite is different, the reason is that the terminals at different positions are at different distances from the satellite and thus there are different propagation delays. In addition, when the terminal moves in the same satellite cell, it does not need to inform the network, so the network does not know the position of the terminal in the cell. Moreover, even if the position of the terminal is unchanged, the distance from the terminal to the satellite changes with the movement of the satellite. Therefore, the paging related configuration may include one or more of the following: a timing advance for monitoring the paging message, a timing delay for monitoring the paging message, or a time window length for monitoring the paging message. Thus, the terminal can monitor the paging message in advance or with a delay, and can also monitor the paging message according to a certain time window length.

The timing advance and the timing delay are relative to the first time. For example, the time corresponding to the time slot for the terminal to monitor the paging message is the first time + n*duration. In a case where the timing advance or the timing delay is configured, the terminal starts to monitor the paging message in advance before the first time + n*duration according to the timing advance or starts to monitor the paging message after the first time + n*duration according to the timing delay. In a case where the time window length is configured, the terminal starts to monitor the paging message at the first time + n*duration and continues for the time window length.

Optionally, in a case where the timing advance, the timing delay or the time window length is not configured, the terminal can also independently determine a start time and an end time of monitoring based on the time corresponding to the time slot for monitoring the paging message determined by the terminal. For example, the terminal can determine a propagation delay of the paging message based on its own position and a position of the satellite cell, that is, the time it takes for the paging message to leave the satellite and reach the terminal, and then determine the time for receiving the paging message. For example, the satellite cell transmits the paging message at a first time T, and the terminal determines that the propagation delay of the paging message is t, then the terminal can start to monitor the paging message at a time corresponding to T+t or after the time corresponding to T+t.

Optionally, the paging related configuration includes a pilot signal, and the terminal monitors the pilot signal based on the paging related configuration. When the pilot signal is monitored, the terminal monitors a control channel (such as a PDCCH), where the control channel is used to schedule the paging message. That is, the terminal monitors the pilot signal based on the paging related configuration, and monitors the control channel according to a monitored pilot signal. The pilot signal is used to assist the terminal in achieving synchronization and assist in receiving the control channel. Optionally, the pilot signal may be a WUS signal, and the WUS signal may be a sequence. Optionally, the terminal may first monitor the WUS signal, and if the WUS signal is monitored, then monitor the control channel for paging scheduling; and if the WUS signal is not monitored, the terminal does not monitor the control channel for paging scheduling.

Optionally, the paging related configuration includes a time for stopping monitoring the paging message based on the paging related configuration, and/or the paging message includes first indication information, where the first indication information is used to indicate that the terminal stops monitoring the paging message based on the paging related configuration after accessing a next cell. The time for stopping monitoring the paging message based on the paging related configuration is a time when the terminal exits the paging mechanism based on the first time in the above embodiments of the present disclosure. Since some satellite cells may not support the above mechanism based on the first time, the terminal needs to fall back to the traditional mechanism in the related art to monitor the paging message. The above paging mechanism based on the first time may be predictive. It is assumed that the network can know which satellite cells do not support the above mechanism, and the network knows when the above satellite cells reach the position where the terminal is located, so that the time for the terminal to stop monitoring the paging message based on the paging related configuration can be indicated in the paging related configuration. The first indication information instructs the terminal through the paging message, when the next satellite cell does not support the above paging mechanism based on time, the terminal needs to, for example, fall back to a traditional or existing mechanism to monitor the paging message.

Optionally, the terminal may report to the core network device whether terminal capability supports the above paging mechanism based on the first time and/or whether the terminal expects to adopt the above paging mechanism based on the first time to monitor the paging message, that is, the terminal transmits second indication information to the core network device, where the second indication information is used to indicate that the terminal supports and/or expects to monitor the paging message based on the paging related configuration. Optionally, the network may transmit indication information to indicate whether it supports the paging mechanism based on the first time in the above embodiments. Herein, whether the network supports the paging mechanism based on the first time includes whether the access network device supports the paging mechanism based on the first time and/or whether the core network device supports the paging mechanism based on the first time. Optionally, when the terminal registers, it indicates to the core network device whether it supports and/or wants to use the paging mechanism based on the first time. If the network supports the paging mechanism based on the first time (including the core network device the cell where the terminal is located supporting the paging mechanism based on the first time), the network transmits the paging related configuration to the terminal; otherwise, the network does not transmit the paging related configuration to the terminal. Correspondingly, if the terminal does not receive the paging related configuration, it is considered that the network does not support the paging mechanism based on the first time. The paging mechanism based on the first time may also be referred to as a paging mechanism based on an absolute time.

The terminal determines the time slot for monitoring the paging message based on the time in the paging related configuration, so that terminal no longer relies on the configuration of the cell to monitor the paging message, and the terminal no longer continuously monitors the system message. As a result, the terminal cannot determine the change of the TA where it is located through a TA code (TAC) broadcast by the system message. Therefore, the terminal needs to be aware of a ground area of a TA or a TA list (TA list) where the terminal is currently located. When the terminal moves beyond the ground area of its current TA or TA list, it needs to perform a TA update. That is, the paging related configuration includes the ground area of the tracking area list or the tracking area where the terminal is located. However, the change of the TA where the terminal is located is no longer determined by receiving the system message, but determined by the terminal itself, for example, according to its own position and a definition of the TA area.

In the paging method of the embodiments of the present disclosure, by utilizing time related configuration to transmit and receive the paging message, the dependence of paging message transmission and reception on cell configuration information is reduced, so that the terminal does not need to care about cell changes and does not need to perform cell reselection, reducing the power consumption of the terminal. This is particularly important for the terminal camped on the NTN cell. By this mechanism, the enthusiasm of the UE to camp on the NTN cell can be improved, and the utilization rate of the NTN system can be improved.

Optionally, if the terminal has more than one receiver, the terminal can use one of the receivers to monitor the paging message in the NTN cell, and use another receiver to complete synchronization with a TN cell and system message reception. However, the terminal does not perform a cell reselection process in the TN network, and the timing of synchronization or system message reception between the terminal and the TN cell is determined by the terminal. In this case, if the terminal monitors the paging message in the NTN network, the terminal can promptly complete network access through the TN network. If the terminal accesses through the TN network, the TN network needs to promptly inform the NTN network, so that the NTN network can stop paging in a timely manner, as shown in FIG. 9. Of course, the terminal can also choose to access the network in the NTN cell. For example, after the terminal receives the paging message, it completes synchronization and system message reception with the NTN cell, and then performs network access.

FIG. 10 is a schematic flowchart II of a paging method provided by the present disclosure. The method is applied to a terminal and includes:
S1001, acquiring a paging related configuration, where the paging related configuration includes a first time, and the first time is used to determine a time slot for the terminal to monitor a paging message;
S1002, monitoring the paging message based on the paging related configuration.

The paging related configuration and the methods executed by the terminal in various feasible implementations can be found in the above embodiments, which will not be repeated here.

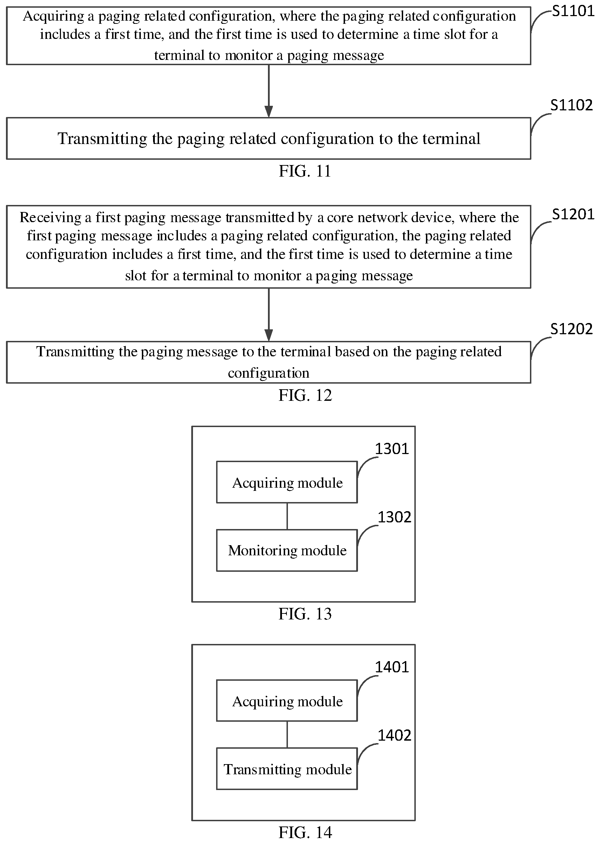

FIG. 11 is a schematic flowchart III of a paging method provided by the present disclosure. The method is applied to a core network device and includes:
S1101, acquiring a paging related configuration, where the paging related configuration includes a first time, and the first time is used to determine a time slot for a terminal to monitor a paging message;
S1102, transmitting the paging related configuration to the terminal.

The paging related configuration and the methods executed by the core network device in various feasible implementations can be found in the above embodiments, which will not be repeated here.

FIG. 12 is a schematic flowchart IV of a paging method provided by the present disclosure. The method is applied to an access network device and includes:
S1201, receiving a first paging message transmitted by a core network device, where the first paging message includes a paging related configuration, the paging related configuration includes a first time, and the first time is used to determine a time slot for a terminal to monitor a paging message;
S1202, transmitting the paging message to the terminal based on the paging related configuration.

The paging related configuration and the methods executed by the access network device in various feasible implementations can be found in the above embodiments, which will not be repeated here.

FIG. 13 is a schematic structural diagram I of a paging apparatus provided by the present disclosure. The paging apparatus includes:
an acquiring module 1301, configured to acquire a paging related configuration, where the paging related configuration includes a first time, and the first time is used to determine a time slot for a terminal to monitor a paging message;
a monitoring module 1302, configured to monitor the paging message based on the paging related configuration.

In an implementation, the acquiring module 1301 includes:
an acquiring unit, configured to acquire the paging related configuration during a registration procedure or a tracking area update procedure of the terminal.

In an implementation, the paging related configuration includes a paging cycle; and the monitoring module 1302 includes:
a first determining unit, configured to determine, based on the first time and the paging cycle, the time slot for the terminal to monitor the paging message;
a first monitoring unit, configured to monitor the paging message based on a determined time slot for the terminal to monitor the paging message.

In an implementation, the first time is a time corresponding to a first paging time slot.

In an implementation, the paging related configuration includes a paging cycle and an interval between paging time slots; and the monitoring module 1302 includes:
a second determining unit, configured to determine based on the first time, the paging cycle and the interval between paging time slots, the time slot for the terminal to monitor the paging message;
a second monitoring unit, configured to monitor the paging message according to a determined time slot for the terminal to monitor the paging message.

In an implementation, the paging related configuration includes one or more of the following: a timing advance for monitoring the paging message, a timing delay for monitoring the paging message or a time window length for monitoring the paging message.

In an implementation, the paging related configuration includes a pilot signal, and the monitoring module 1302 includes:
a third monitoring unit, configured to monitor the pilot signal based on the paging related configuration, and monitor a physical downlink control channel when the pilot signal is monitored, where the physical downlink control channel is used to schedule the paging message.

In an implementation, the paging related configuration includes a time for stopping monitoring the paging message based on the paging related configuration, and/or the paging message includes first indication information, where the first indication information is used to indicate that the terminal stops monitoring the paging message based on the paging related configuration after accessing a next cell.

In an implementation, the paging related configuration includes a ground area of a tracking area list or a tracking area where the terminal is located.

In an implementation, the apparatus further includes:
a transmitting unit, configured to transmit second indication information, where the second indication information is used to indicate that the terminal supports and/or expects to monitor the paging message based on the paging related configuration.

In an implementation, the paging related configuration includes a first part determined by a core network device, and/or a second part determined by an access network device.

In an implementation, the paging related configuration is bound to a ground area or a tracking area where the terminal is located.

In an implementation, the first time is an absolute time.

It should be noted here that the above apparatus provided by the embodiment of the present disclosure can implement all the method steps implemented by the above method embodiments and achieve the same technical effects. The same parts and beneficial effects as those in the method embodiments are not described in detail in the present embodiment.

FIG. 14 is a schematic structural diagram II of a paging apparatus provided by the present disclosure. The paging apparatus includes:
an acquiring module 1401, configured to acquire a paging related configuration, where the paging related configuration includes a first time, and the first time is used to determine a time slot for a terminal to monitor a paging message;
a transmitting module 1402, configured to transmit the paging related configuration to the terminal.

In an implementation, further includes:
a first transmitting unit, configured to transmit a first paging message to an access network device, where the first paging message includes the paging related configuration.

In an implementation, the transmitting module 1402 includes:
a second transmitting unit, configured to transmit the paging related configuration to the terminal during a registration procedure and/or a tracking area update procedure of the terminal.

In an implementation, the paging related configuration includes one or more of the following: a timing advance for monitoring the paging message, a timing delay for monitoring the paging message or a time window length for monitoring the paging message.

In an implementation, the paging related configuration includes a pilot signal.

In an implementation, the paging related configuration includes a time for stopping monitoring the paging message based on the paging related configuration, and/or the first paging message includes first indication information, where the first indication information is used to indicate that the terminal stops monitoring the paging message based on the paging related configuration after accessing a next cell.

In an implementation, the paging related configuration includes a ground area of a tracking area list or a tracking area where the terminal is located.

In an implementation, the apparatus further includes:
a receiving module, configured to receive second indication information transmitted by the terminal, where the second indication information is used to indicate that the terminal supports and/or expects to monitor the paging message based on the paging related configuration.

In an implementation, a part of the paging related configuration is determined by the core network device and the other part of the paging related configuration is determined by the access network device, and the first paging message includes a paging related configuration determined by the core network device.

In an implementation, the paging related configuration is bound to a ground area or a tracking area where the terminal is located.

In an implementation, the first time is an absolute time.

It should be noted here that the above apparatus provided by the embodiment of the present disclosure can implement all the method steps implemented by the above method embodiments and achieve the same technical effects. The same parts and beneficial effects as those in the method embodiments are not described in detail in the present embodiment.

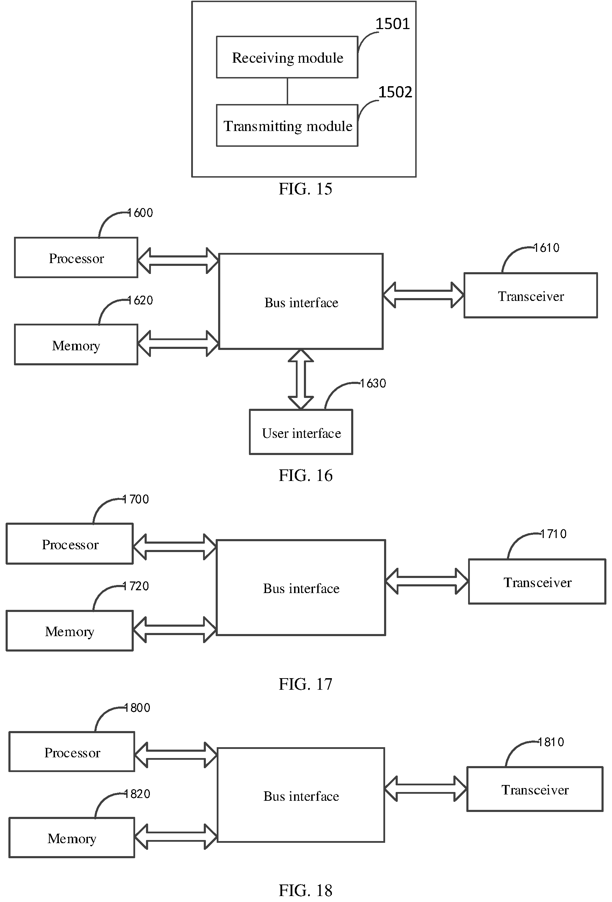

FIG. 15 is a schematic structural diagram III of a paging apparatus provided by the present disclosure. The paging apparatus includes:
a receiving module 1501, configured to receive a first paging message transmitted by a core network device, where the first paging message includes a paging related configuration, the paging related configuration includes a first time, and the first time is used to determine a time slot for a terminal to monitor a paging message;
a transmitting module 1502, configured to transmit the paging message to the terminal based on the paging related configuration.

In an implementation, the first paging message includes a paging related configuration determined by the core network device, and the apparatus further includes:
a transmitting unit, configured to transmit a paging related configuration determined by the access network device to the core network device.

In an implementation, the paging related configuration includes one or more of the following: a timing advance for monitoring the paging message, a timing delay for monitoring the paging message or a time window length for monitoring the paging message.

In an implementation, the paging related configuration includes a pilot signal.

In an implementation, the paging related configuration includes a time for stopping monitoring the paging message based on the paging related configuration, and/or the first paging message includes first indication information, where the first indication information is used to indicate that the terminal stops monitoring the paging message based on the paging related configuration after accessing a next cell.

In an implementation, the paging related configuration includes a ground area of a tracking area list or a tracking area where the terminal is located.

In an implementation, the paging related configuration is bound to the ground area or the tracking area where the terminal is located.

In an implementation, the first time is an absolute time.

It should be noted here that the above apparatus provided by the embodiment of the present disclosure can implement all the method steps implemented by the above method embodiments and achieve the same technical effects. The same parts and beneficial effects as those in the method embodiments are not described in detail in the present embodiment.

FIG. 16 is a schematic structural diagram IV of a paging apparatus provided by the present disclosure. The paging apparatus includes a memory 1620, a transceiver 1610, and a processor 1600. The memory 1620 is configured to store a computer program; and the transceiver 1610 is configured to transmit and receive data under the control of the processor 1600.

In FIG. 16, a bus architecture may include any number of interconnected buses and bridges, and specifically links together various circuits of one or more processors 1600 represented by the processor 1600 and a memory represented by the memory 1620. The bus architecture may also link together various other circuits such as peripheral devices, voltage regulators, and power management circuits, all of which are well known in the art, and therefore will not be further described herein. A bus interface provides an interface. The transceiver 1610 may be a plurality of elements, i.e., includes a transmitter and a receiver, and provides a unit for communicating with various other apparatuses over transmission media including wireless channels, wired channels, optical cables and the like. For different user equipment, a user interface 1630 may also be an interface capable of connecting external and internal required devices, and the connected devices include but are not limited to a keypad, a display, a speaker, a microphone, a joystick, etc.

The processor 1600 is responsible for managing the bus architecture and general processing, and the memory 1620 may store data used by the processor 1600 when performing operations.

Optionally, the processor 1600 may be a CPU (Central Processing Unit), an ASIC (Application Specific Integrated Circuit, Application Specific Integrated Circuit), a FPGA (Field-Programmable Gate Array, Field-Programmable Gate Array), or a CPLD (Complex Programmable Logic Device, Complex Programmable Logic Device), and the processor may also adopt a multi-core architecture. The processor and the memory may also be arranged physically separately.

The processor 1600 is configured to read the computer program in the memory and perform the following operations:
acquiring a paging related configuration, where the paging related configuration includes a first time, and the first time is used to determine a time slot for a terminal to monitor a paging message;
monitoring the paging message based on the paging related configuration.

In an implementation, the processor 1600 is configured to perform:
acquiring the paging related configuration during a registration procedure or a tracking area update procedure of the terminal.

In an implementation, the paging related configuration includes a paging cycle; the processor 1600 is configured to perform:
determining, based on the first time and the paging cycle, the time slot for the terminal to monitor the paging message;
monitoring the paging message based on a determined time slot for the terminal to monitor the paging message.

In an implementation, the first time is a time corresponding to a first paging time slot.

In an implementation, the paging related configuration includes a paging cycle and an interval between paging time slots, the processor 1600 is configured to perform:
determining, based on the first time, the paging cycle and the interval between paging time slots, the time slot for the terminal to monitor the paging message;
monitoring the paging message according to a determined time slot for the terminal to monitor the paging message.

In an implementation, the paging related configuration includes one or more of the following: a timing advance for monitoring the paging message, a timing delay for monitoring the paging message or a time window length for monitoring the paging message.

In an implementation, the paging related configuration includes a pilot signal, and the processor 1600 is configured to perform:
monitoring the pilot signal based on the paging related configuration, and monitoring a physical downlink control channel when the pilot signal is monitored, where the physical downlink control channel is used to schedule the paging message.

In an implementation, the paging related configuration includes a time for stopping monitoring the paging message based on the paging related configuration, and/or the paging message includes first indication information, where the first indication information is used to indicate that the terminal stops monitoring the paging message based on the paging related configuration after accessing a next cell.

In an implementation, the paging related configuration includes a ground area of a tracking area list or a tracking area where the terminal is located.

In an implementation, the processor 1600 is configured to perform:
transmitting second indication information, where the second indication information is used to indicate that the terminal supports and/or expects to monitor the paging message based on the paging related configuration.

In an implementation, the paging related configuration includes a first part determined by a core network device, and/or a second part determined by an access network device.

In an implementation, the paging related configuration is bound to a ground area or a tracking area where the terminal is located.

In an implementation, the first time is an absolute time.

It should be noted here that the above apparatus provided by the embodiment of the present disclosure can implement all the method steps implemented by the above method embodiments and achieve the same technical effects. The same parts and beneficial effects as those in the method embodiments are not described in detail in the present embodiment.

FIG. 17 is a schematic structural diagram IV of a paging apparatus provided by the present disclosure. The paging apparatus includes a memory 1720, a transceiver 1710, and a processor 1700. The memory 1720 is configured to store a computer program; and the transceiver 1710 is configured to transmit and receive data under the control of the processor 1700.

In FIG. 17, a bus architecture may include any number of interconnected buses and bridges, and specifically links together various circuits of one or more processors 1700 represented by the processor 1700 and a memory represented by the memory 1720. The bus architecture may also link together various other circuits such as peripheral devices, voltage regulators, and power management circuits, all of which are well known in the art, and therefore will not be further described herein. A bus interface provides an interface. The transceiver 1710 may be a plurality of elements, i.e., includes a transmitter and a receiver, and provides a unit for communicating with various other apparatuses over transmission media including wireless channels, wired channels, optical cables and the like.

The processor 1700 is responsible for managing the bus architecture and general processing, and the memory 1720 may store data used by the processor 1700 when performing operations.

Optionally, the processor 1700 may be a CPU (Central Processing Unit), an ASIC (Application Specific Integrated Circuit, Application Specific Integrated Circuit), a FPGA (Field-Programmable Gate Array, Field-Programmable Gate Array), or a CPLD (Complex Programmable Logic Device, Complex Programmable Logic Device), and the processor may also adopt a multi-core architecture. The processor and the memory may also be arranged physically separately.

The processor 1700 is configured to read the computer program in the memory and perform the following operations:
acquiring a paging related configuration, where the paging related configuration includes a first time, and the first time is used to determine a time slot for a terminal to monitor a paging message;
transmitting the paging related configuration to the terminal.

In an implementation, the processor 1700 is configured to perform:
transmitting a first paging message to an access network device, where the first paging message includes the paging related configuration.

In an implementation, the processor 1700 is configured to perform:
transmitting the paging related configuration to the terminal during a registration procedure and/or a tracking area update procedure of the terminal.

In an implementation, the paging related configuration includes one or more of the following: a timing advance for monitoring the paging message, a timing delay for monitoring the paging message or a time window length for monitoring the paging message.

In an implementation, the paging related configuration includes a pilot signal.

In an implementation, the paging related configuration includes a time for stopping monitoring the paging message based on the paging related configuration, and/or the first paging message includes first indication information, where the first indication information is used to indicate that the terminal stops monitoring the paging message based on the paging related configuration after accessing a next cell.

In an implementation, the paging related configuration includes a ground area of a tracking area list or a tracking area where the terminal is located.

In an implementation, the processor 1700 is configured to perform:
receiving second indication information transmitted by the terminal, where the second indication information is used to indicate that the terminal supports and/or expects to monitor the paging message based on the paging related configuration.

In an implementation, a part of the paging related configuration is determined by the core network device and the other part of the paging related configuration is determined by the access network device, and the first paging message includes a paging related configuration determined by the core network device.

In an implementation, the paging related configuration is bound to a ground area or a tracking area where the terminal is located.

In an implementation, the first time is an absolute time.

It should be noted here that the above apparatus provided by the embodiment of the present disclosure can implement all the method steps implemented by the above method embodiments and achieve the same technical effects. The same parts and beneficial effects as those in the method embodiments are not described in detail in the present embodiment.

FIG. 18 is a schematic structural diagram IV of a paging apparatus provided by the present disclosure. The paging apparatus includes a memory 1820, a transceiver 1810, and a processor 1800. The memory 1820 is configured to store a computer program; and the transceiver 1810 is configured to transmit and receive data under the control of the processor 1800.

In FIG. 18, a bus architecture may include any number of interconnected buses and bridges, and specifically links together various circuits of one or more processors 1800 represented by the processor 1800 and a memory represented by the memory 1820. The bus architecture may also link together various other circuits such as peripheral devices, voltage regulators, and power management circuits, all of which are well known in the art, and therefore will not be further described herein. A bus interface provides an interface. The transceiver 1810 may be a plurality of elements, i.e., includes a transmitter and a receiver, and provides a unit for communicating with various other apparatuses over transmission media including wireless channels, wired channels, optical cables and the like.

The processor 1800 is responsible for managing the bus architecture and general processing, and the memory 1820 may store data used by the processor 1800 when performing operations.

Optionally, the processor 1800 may be a CPU (Central Processing Unit), an ASIC (Application Specific Integrated Circuit, Application Specific Integrated Circuit), a FPGA (Field-Programmable Gate Array, Field-Programmable Gate Array), or a CPLD (Complex Programmable Logic Device, Complex Programmable Logic Device), and the processor may also adopt a multi-core architecture. The processor and the memory may also be arranged physically separately.

The processor 1800 is configured to read the computer program in the memory and perform the following operations:
receiving a first paging message transmitted by a core network device, where the first paging message includes a paging related configuration, the paging related configuration includes a first time, and the first time is used to determine a time slot for a terminal to monitor a paging message;
transmitting the paging message to the terminal based on the paging related configuration.

In an implementation, the first paging message includes a paging related configuration determined by the core network device, the processor 1800 is configured to perform:
transmitting a paging related configuration determined by the access network device to the core network device.

In an implementation, the paging related configuration includes one or more of the following: a timing advance for monitoring the paging message, a timing delay for monitoring the paging message or a time window length for monitoring the paging message.

In an implementation, the paging related configuration includes a pilot signal.

In an implementation, the paging related configuration includes a time for stopping monitoring the paging message based on the paging related configuration, and/or the first paging message includes first indication information, where the first indication information is used to indicate that the terminal stops monitoring the paging message based on the paging related configuration after accessing a next cell.

In an implementation, the paging related configuration includes a ground area of a tracking area list or a tracking area where the terminal is located.

In an implementation, the first time is an absolute time.

It should be noted here that the above apparatus provided by the embodiment of the present disclosure can implement all the method steps implemented by the above method embodiments and achieve the same technical effects. The same parts and beneficial effects as those in the method embodiments are not described in detail in the present embodiment.

It should be noted that the division of the units in the embodiment of the present disclosure is schematic and only serves as a logical functional division, and the other division manner may be adopted in actual implementation. In addition, in various embodiments of the present disclosure, each functional unit can be integrated into a single processing unit, each unit can physically exist, separately, or two or more units can be integrated into one unit. The aforementioned integrated unit may be realized in a form of hardware or a form of a software functional unit.

If the aforementioned integrated unit is realized in the software function unit and sold or used as an independent product, it can be stored in a processor-readable storage medium. Based on this understanding, the technical solution of the present disclosure is essentially or part of the contribution to the prior art or all or part of the technical solution can be embodied in the form of a software product, and the computer software product is stored in a storage medium, including several instructions to enable a computer device (which may be a personal computer, a server, or a network device, etc.) or a processor (processor) to execute all or part of the steps of the methods in various embodiments of the present disclosure.

The present disclosure provides a non-transitory readable storage medium, where the non-transitory readable storage medium stores a computer program, and the computer program is used for causing a processor to perform the method according to any one of the above embodiments.

The readable storage medium may be any available medium or data storage device that the processor can access, including but not limited to a magnetic memory (such as a floppy disk, a hard disk, a magnetic tape, a magneto-optical disk (MO), etc.), an optical memory (such as a CD, a DVD, a BD, a HVD, etc.), and a semiconductor memory (such as a ROM, an EPROM, an EEPROM, a non-volatile memory (NAND FLASH), a solid state disk (SSD)), etc.

Those skilled in the art shall understand that, the embodiments of the present disclosure can be provided as a method, a system or a computer program product. Therefore, the present disclosure may adopt the form of an entirely hardware embodiment, an entirely software embodiment or an embodiment combining software and hardware. Furthermore, the present disclosure may adopt the form of a computer program product implemented on one or more computer-usable storage media (including but not limited to a disk memory, an optical memory, and the like) containing computer-usable program codes.

The present disclosure is described with reference to the flowcharts and/or block diagrams of the methods, the devices (systems) and the computer program products according to the embodiments of the present disclosure. It should be understood that, each flowchart and/or block in the flowcharts and/or block diagrams and combinations of flows and/or blocks in the flowcharts and/or block diagrams can be implemented by computer-executable instructions. The computer-executable instructions may be provided to a processor of a general-purpose computer, a special-purpose computer, an embedded processor or other programmable data processing devices to produce a machine, which enables instructions executed by a processor of a computer or other programmable data processing devices to generate an apparatus for implementing functions specified in one or more processes in the flowcharts and/or one or more blocks in the block diagrams.

These processor-executable instructions may also be stored in a processor-readable memory that can direct a computer or other programmable data processing devices to operate in a particular manner, so that the instructions stored in the processor-readable memory generate an article of manufacture including an instruction apparatus. The instruction apparatus implements functions specified in one or more processes in the flowcharts and/or one or more blocks in the block diagrams.

Obviously, those skilled in the art can make various modifications and variations to the present disclosure without departing from the spirit and scope of the present disclosure. As such, if these modifications and variations of the present disclosure belong to the scope of the claims of the present disclosure and their equivalents, the present disclosure is intended to include these modifications and variations.

## Claims

1. A paging method, **characterized in that** the method is applied to a terminal and comprises:
acquiring a paging related configuration, wherein the paging related configuration comprises a first time, and the first time is used to determine a time slot for the terminal to monitor a paging message;
monitoring the paging message based on the paging related configuration.

2. The method according to claim 1, wherein the acquiring the paging related configuration comprises:
acquiring the paging related configuration during a registration procedure or a tracking area update procedure of the terminal.

3. The method according to claim 1, wherein the paging related configuration comprises a paging cycle;
the monitoring the paging message based on the paging related configuration comprises:
determining, based on the first time and the paging cycle, the time slot for the terminal to monitor the paging message;
monitoring the paging message based on a determined time slot for the terminal to monitor the paging message.

4. The method according to claim 3, wherein the first time is a time corresponding to a first paging time slot.

5. The method according to claim 1, wherein the paging related configuration comprises a paging cycle and an interval between paging time slots;
the monitoring the paging message based on the paging related configuration comprises:
determining, based on the first time, the paging cycle and the interval between paging time slots, the time slot for the terminal to monitor the paging message;
monitoring the paging message according to a determined time slot for the terminal to monitor the paging message.

6. The method according to any one of claims 1 to 4, wherein the paging related configuration comprises one or more of the following: a timing advance for monitoring the paging message, a timing delay for monitoring the paging message, a time window length for monitoring the paging message, a ground area of a tracking area list or a tracking area where the terminal is located.

7. The method according to any one of claims 1 to 4, wherein the paging related configuration comprises a pilot signal, and the monitoring the paging message based on the paging related configuration comprises:
monitoring the pilot signal based on the paging related configuration, and monitoring a physical downlink control channel when the pilot signal is monitored, wherein the physical downlink control channel is used to schedule the paging message.

8. The method according to any one of claims 1 to 4, wherein the paging related configuration comprises a time for stopping monitoring the paging message based on the paging related configuration, and/or the paging message comprises first indication information, wherein the first indication information is used to indicate that the terminal stops monitoring the paging message based on the paging related configuration after accessing a next cell.

9. The method according to any one of claims 1 to 4, further comprising:
transmitting second indication information, wherein the second indication information is used to indicate that the terminal supports and/or expects to monitor the paging message based on the paging related configuration.

10. The method according to any one of claims 1 to 4, wherein the paging related configuration comprises a first part determined by a core network device, and/or a second part determined by an access network device.

11. The method according to any one of claims 1 to 4, wherein the paging related configuration is bound to a ground area or a tracking area where the terminal is located.

12. The method according to any one of claims 1 to 4, wherein the first time is an absolute time.

13. A paging method, **characterized in that** the method is applied to a core network device and comprises:
acquiring a paging related configuration, wherein the paging related configuration comprises a first time, and the first time is used to determine a time slot for a terminal to monitor a paging message;
transmitting the paging related configuration to the terminal.

14. The method according to claim 13, further comprising:
transmitting a first paging message to an access network device, wherein the first paging message comprises the paging related configuration.

15. The method according to claim 13, wherein the transmitting the paging related configuration to the terminal comprises:
transmitting the paging related configuration to the terminal during a registration procedure and/or a tracking area update procedure of the terminal.

16. The method according to any one of claims 13 to 15, wherein the paging related configuration comprises one or more of the following: a timing advance for monitoring the paging message, a timing delay for monitoring the paging message, a time window length for monitoring the paging message, a pilot signal, a ground area of a tracking area list or a tracking area where the terminal is located.

17. The method according to claim 14, wherein the paging related configuration comprises a time for stopping monitoring the paging message based on the paging related configuration, and/or the first paging message comprises first indication information, wherein the first indication information is used to indicate that the terminal stops monitoring the paging message based on the paging related configuration after accessing a next cell.

18. The method according to any one of claims 13 to 15, wherein the method further comprises:
receiving second indication information transmitted by the terminal, wherein the second indication information is used to indicate that the terminal supports and/or expects to monitor the paging message based on the paging related configuration.

19. The method according to claim 14, wherein a part of the paging related configuration is determined by the core network device and the other part of the paging related configuration is determined by the access network device, and the first paging message comprises a paging related configuration determined by the core network device.

20. The method according to any one of claims 13 to 15, wherein the first time is an absolute time.

21. A paging method, **characterized in that** the method is applied to an access network device and comprises:
receiving a first paging message transmitted by a core network device, wherein the first paging message comprises a paging related configuration, the paging related configuration comprises a first time, and the first time is used to determine a time slot for a terminal to monitor a paging message;
transmitting the paging message to the terminal based on the paging related configuration.

22. The method according to claim 21, wherein the first paging message comprises a paging related configuration determined by the core network device, and the method further comprises:
transmitting a paging related configuration determined by the access network device to the core network device.

23. The method according to claim 21, wherein the paging related configuration comprises one or more of the following: a timing advance for monitoring the paging message, a timing delay for monitoring the paging message, a time window length for monitoring the paging message, a pilot signal, a ground area of a tracking area list or a tracking area where the terminal is located.

24. The method according to any one of claims 21 to 23, wherein the paging related configuration comprises a time for stopping monitoring the paging message based on the paging related configuration, and/or the first paging message comprises first indication information, wherein the first indication information is used to indicate that the terminal stops monitoring the paging message based on the paging related configuration after accessing a next cell.

25. The method according to any one of claims 21 to 23, wherein the first time is an absolute time.

26. A paging apparatus, **characterized by** comprising:
an acquiring module, configured to acquire a paging related configuration, wherein the paging related configuration comprises a first time, and the first time is used to determine a time slot for a terminal to monitor a paging message;
a monitoring module, configured to monitor the paging message based on the paging related configuration.

27. The apparatus according to claim 26, wherein the acquiring module comprises:
an acquiring unit, configured to acquire the paging related configuration during a registration procedure or a tracking area update procedure of the terminal.

28. The apparatus according to claim 26, wherein the paging related configuration comprises a paging cycle; and the monitoring module comprises:
a first determining unit, configured to determine, based on the first time and the paging cycle, the time slot for the terminal to monitor the paging message;
a first monitoring unit, configured to monitor the paging message based on a determined time slot for the terminal to monitor the paging message.

29. The apparatus according to claim 28, wherein the first time is a time corresponding to a first paging time slot.

30. The apparatus according to claim 26, wherein the paging related configuration comprises a paging cycle and an interval between paging time slots; and the monitoring module comprises:
a second determining unit, configured to determine based on the first time, the paging cycle and the interval between paging time slots, the time slot for the terminal to monitor the paging message;
a second monitoring unit, configured to monitor the paging message according to a determined time slot for the terminal to monitor the paging message.

31. The apparatus according to any one of claims 26 to 29, wherein the paging related configuration comprises one or more of the following: a timing advance for monitoring the paging message, a timing delay for monitoring the paging message, a time window length for monitoring the paging message, a ground area of a tracking area list or a tracking area where the terminal is located.

32. The apparatus according to any one of claims 26 to 29, wherein the paging related configuration comprises a pilot signal, and the monitoring module comprises:
a third monitoring unit, configured to monitor the pilot signal based on the paging related configuration, and monitoring a physical downlink control channel when the pilot signal is monitored, wherein the physical downlink control channel is used to schedule the paging message.

33. The apparatus according to any one of claims 26 to 29, wherein the paging related configuration comprises a time for stopping monitoring the paging message based on the paging related configuration, and/or the paging message comprises first indication information, wherein the first indication information is used to indicate that the terminal stops monitoring the paging message based on the paging related configuration after accessing a next cell.

34. The apparatus according to any one of claims 26 to 29, wherein the apparatus further comprises:
a transmitting unit, configured to transmit second indication information, wherein the second indication information is used to indicate that the terminal supports and/or expects to monitor the paging message based on the paging related configuration.

35. The apparatus according to any one of claims 26 to 29, wherein the paging related configuration comprises a first part determined by a core network device, and/or a second part determined by an access network device.

36. The apparatus according to any one of claims 26 to 29, wherein the paging related configuration is bound to a ground area or a tracking area where the terminal is located.

37. The apparatus according to any one of claims 26 to 29, wherein the first time is an absolute time.

38. A paging apparatus, **characterized by** comprising:
an acquiring module, configured to acquire a paging related configuration, wherein the paging related configuration comprises a first time, and the first time is used to determine a time slot for a terminal to monitor a paging message;
a transmitting module, configured to transmit the paging related configuration to the terminal.

39. The apparatus according to claim 38, further comprising:
a first transmitting unit, configured to transmit a first paging message to an access network device, wherein the first paging message comprises the paging related configuration.

40. The apparatus according to claim 38, wherein the transmitting module comprises:
a second transmitting unit, configured to transmit the paging related configuration to the terminal during a registration procedure and/or a tracking area update procedure of the terminal.

41. The apparatus according to any one of claims 38 to 40, wherein the paging related configuration comprises one or more of the following: a timing advance for monitoring the paging message, a timing delay for monitoring the paging message, a time window length for monitoring the paging message, a pilot signal, a ground area of a tracking area list or a tracking area where the terminal is located.

42. The apparatus according to claim 39, wherein the paging related configuration comprises a time for stopping monitoring the paging message based on the paging related configuration, and/or the first paging message comprises first indication information, wherein the first indication information is used to indicate that the terminal stops monitoring the paging message based on the paging related configuration after accessing a next cell.

43. The apparatus according to any one of claims 38 to 40, wherein the apparatus further comprises:
a receiving module, configured to receive second indication information transmitted by the terminal, wherein the second indication information is used to indicate that the terminal supports and/or expects to monitor the paging message based on the paging related configuration.

44. The apparatus according to claim 39, wherein a part of the paging related configuration is determined by the core network device and the other part of the paging related configuration is determined by the access network device, and the first paging message comprises a paging related configuration determined by the core network device.

45. The apparatus according to any one of claims 38 to 40, wherein the first time is an absolute time.

46. A paging apparatus, **characterized by** comprising:
a receiving module, configured to receive a first paging message transmitted by a core network device, wherein the first paging message comprises a paging related configuration, the paging related configuration comprises a first time, and the first time is used to determine a time slot for a terminal to monitor a paging message;
a transmitting module, configured to transmit the paging message to the terminal based on the paging related configuration.

47. The apparatus according to claim 46, wherein the first paging message comprises a paging related configuration determined by the core network device, and the apparatus further comprises:
a transmitting unit, configured to transmit a paging related configuration determined by the access network device to the core network device.

48. The apparatus according to claim 46, wherein the paging related configuration comprises one or more of the following: a timing advance for monitoring the paging message, a timing delay for monitoring the paging message, a time window length for monitoring the paging message, a pilot signal, a ground area of a tracking area list or a tracking area where the terminal is located.

49. The apparatus according to any one of claims 46 to 48, wherein the paging related configuration comprises a time for stopping monitoring the paging message based on the paging related configuration, and/or the first paging message comprises first indication information, wherein the first indication information is used to indicate that the terminal stops monitoring the paging message based on the paging related configuration after accessing a next cell.

50. The apparatus according to any one of claims 46 to 48, wherein the first time is an absolute time.

51. A paging apparatus, **characterized by** comprising: a memory, a transceiver and a processor:
wherein the memory is configured to store a computer program; the transceiver is configured to transmit and receive data under control of the processor; and the processor is configured to read the computer program from the memory and perform the following operations:
acquiring a paging related configuration, wherein the paging related configuration comprises a first time, and the first time is used to determine a time slot for a terminal to monitor a paging message;
monitoring the paging message based on the paging related configuration.

52. The apparatus according to claim 51, wherein the processor is configured to perform:
acquiring the paging related configuration during a registration procedure or a tracking area update procedure of the terminal.

53. The apparatus according to claim 51, wherein the paging related configuration comprises a paging cycle;
and the processor is configured to perform:
determining, based on the first time and the paging cycle, the time slot for the terminal to monitor the paging message;
monitoring the paging message based on a determined time slot for the terminal to monitor the paging message.

54. The apparatus according to claim 53, wherein the first time is a time corresponding to a first paging time slot.

55. The apparatus according to claim 51, wherein the paging related configuration comprises a paging cycle and an interval between paging time slots;
and the processor is configured to perform:
determining, based on the first time, the paging cycle and the interval between paging time slots, the time slot for the terminal to monitor the paging message;
monitoring the paging message according to a determined time slot for the terminal to monitor the paging message.

56. The apparatus according to any one of claims 51 to 55, wherein the paging related configuration comprises one or more of the following: a timing advance for monitoring the paging message, a timing delay for monitoring the paging message, a time window length for monitoring the paging message, a ground area of a tracking area list or a tracking area where the terminal is located.

57. The apparatus according to any one of claims 51 to 55, wherein the paging related configuration comprises a pilot signal, and the processor is configured to perform:
monitoring the pilot signal based on the paging related configuration, and monitoring a physical downlink control channel when the pilot signal is monitored, wherein the physical downlink control channel is used to schedule the paging message.

58. The apparatus according to any one of claims 51 to 55, wherein the paging related configuration comprises a time for stopping monitoring the paging message based on the paging related configuration, and/or the paging message comprises first indication information, wherein the first indication information is used to indicate that the terminal stops monitoring the paging message based on the paging related configuration after accessing a next cell.

59. The apparatus according to any one of claims 51 to 55, wherein the processor is configured to perform:
transmitting second indication information, wherein the second indication information is used to indicate that the terminal supports and/or expects to monitor the paging message based on the paging related configuration.

60. The apparatus according to any one of claims 51 to 55, wherein the paging related configuration comprises a first part determined by a core network device, and/or a second part determined by an access network device.

61. The apparatus according to any one of claims 51 to 55, wherein the paging related configuration is bound to a ground area or a tracking area where the terminal is located.

62. The apparatus according to any one of claims 51 to 55, wherein the first time is an absolute time.

63. A paging apparatus, **characterized by** comprising: a memory, a transceiver and a processor:
wherein the memory is configured to store a computer program; the transceiver is configured to transmit and receive data under control of the processor; and the processor is configured to read the computer program from the memory and perform the following operations:
acquiring a paging related configuration, wherein the paging related configuration comprises a first time, and the first time is used to determine a time slot for a terminal to monitor a paging message;
transmitting the paging related configuration to the terminal.

64. The apparatus according to claim 63, further comprising:
transmitting a first paging message to an access network device, wherein the first paging message comprises the paging related configuration.

65. The apparatus according to claim 63, wherein the transmitting the paging related configuration to the terminal comprises:
transmitting the paging related configuration to the terminal during a registration procedure and/or a tracking area update procedure of the terminal.

66. The apparatus according to any one of claims 63 to 65, wherein the paging related configuration comprises one or more of the following: a timing advance for monitoring the paging message, a timing delay for monitoring the paging message, a time window length for monitoring the paging message, a pilot signal, a ground area of a tracking area list or a tracking area where the terminal is located.

67. The apparatus according to claim 64, wherein the paging related configuration comprises a time for stopping monitoring the paging message based on the paging related configuration, and/or the first paging message comprises first indication information, wherein the first indication information is used to indicate that the terminal stops monitoring the paging message based on the paging related configuration after accessing a next cell.

68. The apparatus according to any one of claims 63 to 65, wherein the processor is configured to perform:
receiving second indication information transmitted by the terminal, wherein the second indication information is used to indicate that the terminal supports and/or expects to monitor the paging message based on the paging related configuration.

69. The apparatus according to claim 64, wherein a part of the paging related configuration is determined by a core network device and the other part of the paging related configuration is determined by the access network device, and the first paging message comprises a paging related configuration determined by the core network device.

70. The apparatus according to any one of claims 63 to 65, wherein the first time is an absolute time.

71. A paging apparatus, **characterized by** comprising: a memory, a transceiver and a processor:
wherein the memory is configured to store a computer program; the transceiver is configured to transmit and receive data under control of the processor; and the processor is configured to read the computer program from the memory and perform the following operations:
receiving a first paging message transmitted by a core network device, wherein the first paging message comprises a paging related configuration, the paging related configuration comprises a first time, and the first time is used to determine a time slot for a terminal to monitor a paging message;
transmitting the paging message to the terminal based on the paging related configuration.

72. The apparatus according to claim 71, wherein the first paging message comprises a paging related configuration determined by the core network device, and the apparatus further comprises:
transmitting a paging related configuration determined by an access network device to the core network device.

73. The apparatus according to claim 71, wherein the paging related configuration comprises one or more of the following: a timing advance for monitoring the paging message, a timing delay for monitoring the paging message, a time window length for monitoring the paging message, a pilot signal, a ground area of a tracking area list or a tracking area where the terminal is located.

74. The apparatus according to any one of claims 71 to 73, wherein the paging related configuration comprises a time for stopping monitoring the paging message based on the paging related configuration, and/or the first paging message comprises first indication information, wherein the first indication information is used to indicate that the terminal stops monitoring the paging message based on the paging related configuration after accessing a next cell.

75. The apparatus according to any one of claims 71 to 73, wherein the first time is an absolute time.

76. A non-transitory readable storage medium, **characterized in that** the non-transitory readable storage medium stores a computer program, and the computer program is used for causing a processor to perform the method according to any one of claims 1 to 25.
